# EUROPEAN PATENT APPLICATION

(11) **EP 4 425 851 A1**
(43) Date of publication of application: **04.09.2024**
(21) Application number: 22948262.5
(22) Date of filing: 28.06.2022
(51) Int. Cl.: H04L 12/46

(54) **PACKET FORWARDING**

(71) Applicant: New H3C Technologies Co., Ltd., Hangzhou, Zhejiang 310052 (CN)
(72) Inventor: LI, Hao, Beijing 100102 (CN)
(74) Representative: IPAZ
(86) International application number: PCT/CN2022/101724
(87) International publication number: WO 2024/000139

(57) **Abstract**

The present disclosure provides packet forwarding and relates to the technical field of communications. The solutions of the present disclosure comprise: receiving a first packet comprising a destination address and a first Segment Routing Header (SRH) comprising a SID list indicating a forwarding path; sending the first packet on the forwarding path if the destination address is a locally instantiated SID and the first SRH includes indicating information used for indicating that the first packet is a detection packet. The present disclosure can avoid the problem that a head node erroneously switches paths.

## Description

### TECHNICAL FIELD

The present disclosure relates to the technical field of communications, and in particular, to packet forwarding.

### BACKGROUND

In a Segment Routing Internet Protocol Version 6 (SRv6) network, after receiving a service packet, a head node can encapsulate a Segment Routing Header (SRH) in the outer layer of the head node. A Segment List is contained in the SRH. In the Segment List, a forwarding path of the service packet in the SRv6 network is contained. Thus, nodes in the SRv6 network can forward the service packet based on the forwarding path.

Currently, a SRv6 network can be combined with a service chain function. Based on actual service needs, endpoint nodes in the SRv6 network can be connected with Service Function nodes. After an endpoint node receives traffic, it forwards the received traffic based on a Segment List, to a service function node for processing a value-added service. After the service function node finishes the processing, the traffic is then forwarded back to the endpoint node so that the traffic continues to be transmitted in the SRv6 network. A service function node can be a node that provides a function such as billing or firewall.

In actual deployment, at least two forwarding paths can be deployed. When one path fails, a head node can switch traffic to a standby path. The head node can generate a Bidirectional Forwarding Detection (BFD) packet based on a Segment List, so that the BFD packet is forwarded based on a path indicated by the Segment List, so as to detect whether the currently used forwarding path fails according to the BFD packet. However, as a service function node is used for processing a service packet and a BFD packet is not an original service packet, after a BFD packet is forwarded to a service function node based on a Segment List, the service function node may be unable to recognize and process the BFD packet, causing the BFD packet to be discarded and further causing the head node to erroneously conclude that the currently used path fails and trigger an erroneous switch between a primary path and a standby path.

### SUMMARY

An objective of examples of the present disclosure is to forward packet so as to avoid the problem of erroneous switching of paths by a head node. Specific technical solutions are as follows:
In a first aspect, an example of the present disclosure provides a packet forwarding method applied to a network device, the method comprises:
receiving a first packet comprising a destination address and a first Segment Routing Header (SRH), the first SRH comprises a Segment ID (SID) list indicating a forwarding path;
sending the first packet on the forwarding path if the destination address is a locally instantiated SID and the first SRH includes indicating information, the indicating information is used for indicating that the first packet is a detection packet.

In an example, the network device is connected with a service function node;
before sending the first packet on the forwarding path, the method further comprises:
obtaining a link state of a link between the network device and the service function node;
if the link state is inaccessible, then discarding the first packet;
if the link state is accessible, then sending the first packet on the forwarding path.

In an example, obtaining the link state of the link between the network device and the service function node specifically comprises:
obtaining the link state of the link between the network device and the service function node from a data plane;
wherein, if the service function node fails and/or the link between the network device and the service function node fails, then the link state is inaccessible;
if the service function node does not fail and the link between the network device and the service function node does not fail, then the link state is accessible.

In an example, the first SRH comprises flags field, and one bit in the flags field carries the indicating information.

In an example, sending the first packet on the forwarding path if the destination address is a locally instantiated SID and the first SRH includes indicating information, specifically comprises:
if the destination address is a locally instantiated proxy SID and the first SRH includes the indicating information, then forwarding the first packet to a network device indicated by a next SID in the SID list; or,
if the destination address is a locally instantiated Binding Segment Identifier (BSID) and the first SRH includes the indicating information, then encapsulating the first packet with a second SRH including the indicating information in an outer layer of the first packet, and sending the first packet including the second SRH on a forwarding path indicated by a SID list included in the second SRH.

In a second aspect, an example of the present disclosure provides a packet forwarding method applied to a head node, the method comprises:
generating a first packet comprising a destination address and a first Segment Routing Header (SRH), the first SRH comprises a Segment ID (SID) list indicating a forwarding path and indicating information indicating that the first packet is a detection packet;
sending the first packet on the forwarding path.

In an example, after sending the first packet on the forwarding path, the method further comprises:
if a response packet for the first packet has not been received within a preset duration, then switching to a standby forwarding path

In an example, the first SRH comprises flags field, and one bit in the flags field carries the indicating information.

In a third aspect, an example of the present disclosure provides a packet forwarding apparatus applied to a network device, the apparatus comprises:
a receiving module, to receive a first packet comprising a destination address and a first Segment Routing Header (SRH), the first SRH comprises a Segment ID (SID) list indicating a forwarding path;
a sending module, to send the first packet on the forwarding path if the destination address is a locally instantiated SID and the first SRH includes indicating information, the indicating information is used for indicating that the first packet is a detection packet.

In an example, the network device is connected with a service function node; the apparatus further comprises: a obtaining module and a discarding module;
the obtaining module, to obtain a link state of a link between the network device and the service function node;
the discarding module, to discard the first packet if the link state obtained by the obtaining module is inaccessible;
the sending module, to send the first packet on the forwarding path if the link state obtained by the obtaining module is accessible.

In an example, the obtaining module is specifically to:
obtain the link state of the link between the network device and the service function node from a data plane;
wherein, if the service function node fails and/or the link between the network device and the service function node fails, then the link state is inaccessible;
if the service function node does not fail, and the link between the network device and the service function node does not fail, then the link state is accessible.

In an example, the first SRH comprises flags field, and one bit in the flags field carries the indicating information.

In an example, the sending module is specifically to:
forward, if the destination address is a locally instantiated proxy SID and the first SRH includes the indicating information, the first packet to a network device indicated by a next SID in the SID list; or,
encapsulate, if the destination address is a locally instantiated Binding Segment Identifier (BSID) and the first SRH includes the indicating information, the first packet with a second SRH including the indicating information in an outer layer of the first packet, and send the first packet including the second SRH on a forwarding path indicated by a SID list included in the second SRH.

In a fourth aspect, an example of the present disclosure provides a packet forwarding apparatus applied to a head node, the apparatus comprises:
a generating module, to generate a first packet comprising a destination address and a first Segment Routing Header (SRH), the first SRH comprises a Segment ID (SID) list indicating a forwarding path and indicating information indicating that the first packet is a detection packet;
a sending module, to send the first packet on the forwarding path.

In an example, the apparatus further comprises: a switching module;
the switching module, to switch to a standby forwarding path if a response packet for the first packet has not been received within a preset duration.

In an example, the first SRH comprises flags field, and one bit in the flags field carries the indicating information.

In a fifth aspect, an example of the present disclosure provides a network device comprising:
a processor;
a transceiver;
a machine readable storage medium storing machine executable instructions executable by the processor; the machine executable instructions causes the processor to execute the following operations:
   receiving a first packet through the transceiver, the first packet comprises a destination address and a first Segment Routing Header (SRH), the first SRH comprises a Segment ID (SID) list indicating a forwarding path;
   sending the first packet on the forwarding path through the transceiver if the destination address is a locally instantiated SID and the first SRH includes indicating information, the indicating information is used for indicating that the first packet is a detection packet.

In an example, the network device is connected with a service function node;
the machine executable instructions further cause the processor to execute the following operations:
obtaining a link state of a link between the network device and the service function node;
if the link state is inaccessible, then discarding the first packet;
if the link state is accessible, then sending the first packet on the forwarding path.

In an example, the machine executable instructions further cause the processor to execute the following operations:
obtaining the link state of the link between the network device and the service function node from a data plane;
wherein, if the service function node fails and/or the link between the network device and the service function node fails, then the link state is inaccessible;
if the service function node does not fail and the link between the network device and the service function node does not fail, then the link state is accessible.

In an example, the first SRH comprises flags field, and one bit in the flags field carries the indicating information.

In an example, the machine executable instructions further cause the processor to execute the following operations:
if the destination address is a locally instantiated proxy SID and the first SRH includes the indicating information, then forwarding, through the transceiver, the first packet to a network device indicated by a next SID in the SID list; or
if the destination address is a locally instantiated Binding Segment Identifier (BSID) and the first SRH includes the indicating information, then encapsulating the first packet with a second SRH including the indicating information in an outer layer of the first packet, and sending, through the transceiver, the first packet including the second SRH on a forwarding path indicated by a SID list included in the second SRH.

In a sixth aspect, an example of the present disclosure provides a head node comprising:
a processor;
a transceiver;
a machine readable storage medium storing machine executable instructions executable by the processor; the machine executable instructions cause the processor to execute the following operations:
   generating a first packet comprising a destination address and a first Segment Routing Header (SRH), the first SRH comprises a Segment ID (SID) list indicating a forwarding path and indicating information indicating that the first packet is a detection packet;
   sending, through the transceiver, the first packet on the forwarding path.

In an example, the machine executable instructions further cause the processor to execute the following operations:
if a response packet for the first packet has not been received within a preset duration, then switching to a standby forwarding path.

In an example, the first SRH comprises flags field, and one bit in the flags field carries the indicating information.

In a seventh aspect, an example of the present disclosure provides a machine readable storage medium storing machine executable instructions, when called and executed by a processor, the machine executable instructions causing the processor to: implement the method according to any of the above described first aspect or second aspect.

In an eighth aspect, a computer program product that causes the processor to: implement the method according to any of the above described first aspect or second aspect.

By employing the above-described technical solutions, after a network device receives a first packet, if the destination of the first packet is a locally instantiated SID and the first SRH of the first packet includes indicating information, then the network device can realize that the first packet is a detection packet, and thus the network device sends a first packet on a forwarding path indicated by a SID list, instead of forwarding the first packet to a service function node. Thus, discarding of the first packet by a service function node can be avoided, and thus the problem that a head node erroneously switches path because a service function node discards a detection packet used for detecting a path is avoided.

### BRIEF DESCRIPTION OF THE DRAWINGS

In order to more clearly illustrate the technical solutions of examples of the present disclosure and the prior art, the accompanying drawings needed in the examples and the prior art are described briefly below. Obviously, the accompanying drawings in the following description are only some examples of the present disclosure. For those of ordinary skill in the art, other examples can also be obtained according to these accompanying drawings without any creative work.
Fig. 1 is a schematic view of a scenario in which a service chain function is combined with SRv6 provided by an example of the present disclosure;
Fig. 2 is a schematic view of primary and standby paths provided by an example of the present disclosure;
Fig. 3 is a schematic flow chart of a packet forwarding method provided by an example of the present disclosure;
Fig. 4a is a schematic view of a first SRH provided by an example of the present disclosure;
Fig. 4b is an exemplary schematic view of Flags field provided by an example of the present disclosure;
Fig. 5 is a schematic flow chart of another packet forwarding method provided by an example of the present disclosure;
Fig. 6 is an exemplary schematic view of a scenario of cross-domain forwarding a first packet provided by an example of the present disclosure;
Fig. 7 is a schematic flow chart of another packet forwarding method provided by an example of the present disclosure;
Fig. 8 is a schematic structural view of a packet forwarding apparatus provided by an example of the present disclosure;
Fig. 9 is a schematic structural view of another packet forwarding apparatus provided by an example of the present disclosure;
Fig. 10 is a schematic structural view of a network device provided by an example of the present disclosure;
Fig. 11 is a schematic structural view of a head node provided by an example of the present disclosure.

### DETAILED DESCRIPTION

In order to make the objectives, technical solutions, and advantages of the present disclosure clearer, the present disclosure will be described in further detail below with reference to the accompanying drawings and examples. Obviously, the described examples are only some, but not all, of the examples of the present disclosure. Based on the examples in the present disclosure, all other examples obtained by those of ordinary skill in the art without creative work fall within the protection scope of the present disclosure.

To facilitate understanding, relevant concepts involved in examples of the present disclosure are first explained and described.

SRv6 is a source routing technology. A head node in a SRv6 network can add an SRH encapsulation to traffic, and guide the traffic to be forwarded according to a specified path by means of a Segment List in the SRH.

A service chain function means that during the forwarding of traffic, a Service Function Forwarder (SFF) node is caused to send traffic to a Service Function (SF) node according to a planned order, so that the SF node processes the traffic. In particular, an SF node can realize functions such as billing or firewall.

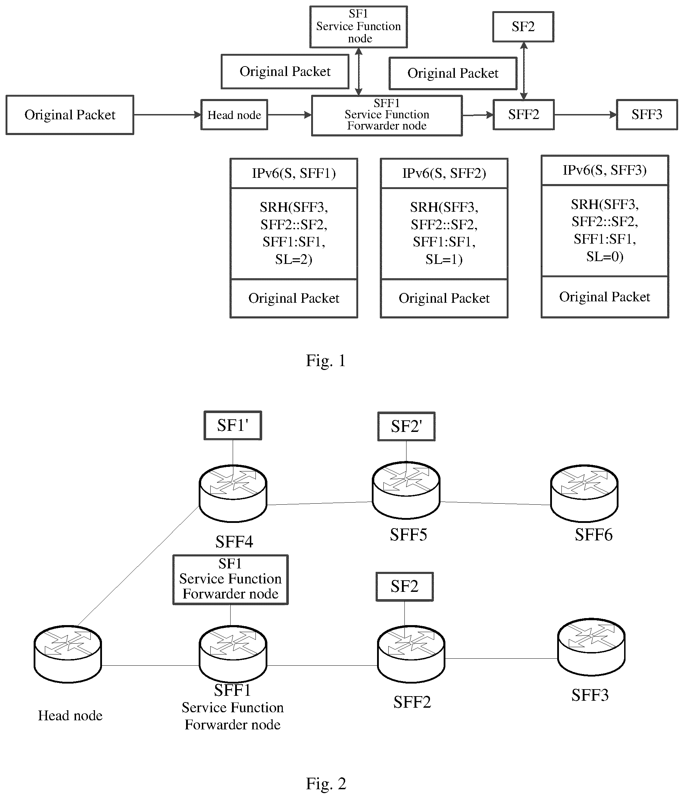

Currently, a service chain function can be combined with SRv6. In other words, a service chain function can be realized in a SRv6 network and the service chain can be arranged through a Segment List of the SRv6. As shown in Fig. 1, after a head node (i.e., a Classifier in the scenario of a service chain function) receives an Original Packet, an Internet Protocol Version 6 (IPv6) header and a SRH is encapsulated in an outer layer of the Original Packet.

The source address of the IPv6 header is the source address of the original service packet, and its destination address is SFF1.

A Segment List contained in the SRH is SFF1::SF1, SFF2::SF2, SFF3.

SFF1::SF1 is the Segment ID (SID) of SFF1 used for instructing SF1 to send a packet to SF1 and its type can be End.AD, End.AS, or End.AM.

SFF2::SF2 is the SID of SFF2 used for instructing SFF2 to send a packet to SF2 and its type can be End.AD, End.AS, or End.AM.

SFF3 is the SID of SFF3 and its type can be an original End type.

The head node can forward the packet encapsulated with IPv6 header and the SRH to SFF1. If the type of SFF1 is End.AD or End.As, then SFF1 can forward the Original Packet to SF1. After SF1 processes the Original Packet, the processed Original Packet is forwarded to SFF1. Further, SFF1 re-encapsulates the processed Original Packet with IPv6 header and SRH and sends it to SFF2. The processing of the packet by SFF2 is similar to that of SFF1 and is not described further here.

The above-mentioned End.AD is a SRv6 SID used for indicating that the node to which End.AD belongs, as a Segment Routing (SR) Proxy. Before forwarding the packet to the SF node for processing, the IPv6 header and SRH of the packet are temporarily deleted, and then forwarded to the SF node. After receiving the packet processed by the SF node, based on the information of the IPv6 header and the SRH cached in the dynamic cache, the packet is re-encapsulated with the IPv6 header and the SRH. That is to say, the node to which End.AD belongs can act as a dynamic proxy node and maintain a dynamic cache for each service chain in the dynamic cache.

End.AS is another SRv6 SID used for indicating that the node to which End.AS belongs, as a SR Proxy, can realize a packet processing function similar to End.AD. It differs from End.AD in that the node to which End.AS belongs re-encapsulates the packet with IPv6 header and SRH based on static instantiation information, with no need for maintaining dynamic cache.

End.AM is another SRv6 SID used for indicating that the SFF node to which End.AM belongs, as a SR Proxy, can be connected to an SF node that has the ability to recognize SRH. The SFF node to which End.AM belongs will update the destination address of the packet to a segment with SL = 0, i.e., the final destination address of the packet, before forwarding the packet to the SF node. After processing the packet, the SF node, in turn, will return the processed packet to the SFF node based on the destination address. The SFF node, in turn, updates the destination address of the packet to a segment indicated by a current SL in the SRH so that the packet continues to be forwarded along a path indicated by the Segment List.

In actual deployment, a plurality of service function chains can be deployed for some key services. As shown in Fig. 2, Fig. 2 is described using the example of deploying two service function chains, a primary path of <SFF1::SF1, SFF2:SF2, SFF3>, and a standby path of <SFF4:: SF 1', SFF5::SF2', SFF6>. The SF1' and SF2' in the standby path and the SF1 and SF2 in the primary path can realize the same services. In the event that the primary path fails, a head node can switch to the standby path, ensuring normal service operations.

To detect the state of a path, the head node will generate a BFD packet used for detecting the primary path based on a Segment List of the primary path. As SF1 and SF2 are used for processing a service packet, and a BFD packet is not an original service packet, SF1 and SF2 may be unable to recognize and process the BFD packet, resulting in discarding the BFD packet and thus causing the head node to erroneously conclude that the currently used path fails and trigger an erroneous switching between the primary and standby paths.

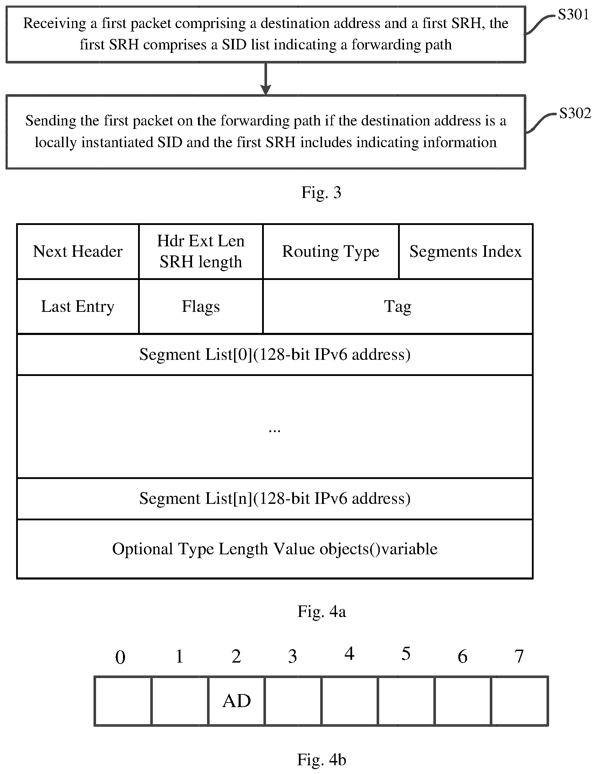

In order to avoid the problem that a head node erroneously switches paths because a service node discards a packet used for detecting a path, an example of the present disclosure provides a packet forwarding method applied to a network device. As shown in Fig. 3, the method comprises:
S301: receiving a first packet comprising a destination address and a first Segment Routing Header (SRH), the first SRH comprises a Segment ID (SID) list indicating a forwarding path.

The destination address of the first packet is a destination address in an IPv6 header of the first packet.

Using Fig. 2 as an example, if SFF4 receives the first packet sent by the head node, then the destination address of the first packet is the SID of SFF4, and the forwarding path indicated by the SID list is SFF4-SFF5-SFF6.

S302: sending the first packet on the forwarding path if the destination address is a locally instantiated SID and the first SRH includes indicating information.

In this example, the indicating information is used for indicating that the first packet is a detection packet.

In an example, the detection packet can be BFD packet, a SBFD packet, or a two-way active measurement protocol (TWAMP) packet or a TWAMP light packet.

If the network device recognizes the first SRH of the first packet includes indication information, then it is determined that the first packet is an active detection packet and thus the network device will not forward the first packet to a service function node. The network device can send the first packet on the forwarding path indicated by the SID list.

For example, using Fig. 2 as an example, after SFF4 receives the first packet sent by the head node, if the destination address of the first packet is a locally instantiated SID and the first SRH includes indicating information, then the first packet is not sent to SF1'. Instead, the destination address of the first packet is updated to the SID of SFF5 based on the SID list and the first packet is forwarded to SFF5.

After SFF5 receives the first packet and determines that the destination address of the first packet is a locally instantiated SID and the first SRH includes indicating information, then the destination address of the first packet is updated to the destination address of SFF6 and the first packet is forwarded to SFF6. It can be seen that the first packet is not forwarded to an SF node and instead is forwarded along a forwarding path indicated by the SID list (SFF4-SFF5-SFF6).

In the packet forwarding method provided by the example of the present disclosure, after a network device receives a first packet, if the destination address of the first packet is a locally instantiated SID and a first SRH of the first packet includes indicating information, then the network device can learn that the first packet is a detection packet and thus sends the first packet on a forwarding path indicated by the SID list, instead of forwarding the first packet to the service function node. In this way, it is possible to avoid the service function node from discarding the first packet, thereby avoiding the problem that the head node erroneously switches the path due to the service function node discarding a detection packet used for detecting a path.

In an example of the present disclosure, the first SRH includes flags field, and one bit in the flags field carries the indicating information.

The structure of the first SRH is as shown in Fig. 4a. The first SRH includes the following fields:
Next Header with a length of 8 bits, used for identifying the type of a next packet header.

SRH length (Hdr Ext Len) with a length of 8 bits, indicating the length of the SRH using 8 bits as the unit, excluding the first 8 bits.

Routing Type with a length of 8 bits and a value of 4, indicating that the SRH is carried.

Segments Left (SL) with a length of 8 bits, is the number of a segment list to be processed next.

Last Entry with a length of 8 bits and a value being the number of the first SID of the actual forwarding path of the packet in the SRH.

Flags with a length of 8 bits, is flag information.

Tags with a length of 16 bits, used for tagging a set of packets having the same property.

Segment List, which is a list of SIDs arranged in the order of nodes from far to near on the forwarding path of a packet. In other words, Segment List [0] indicates the last SID of the path, Segment List [1] indicates the second last SID of the path, so on and so forth. Each SID can be a 128-bit IPv6 address.

Optional Type Length Value objects()variable.

Fig.4a shows a non-compressed, full SID. In an example of the present disclosure, the Segment List can also carry a compressed SID.

In an example of the present disclosure, one bit of the Flags field of the first SRH can be used to carry the indicating information. For example, as shown in Fig. 4b, which is an exemplary schematic view of the Flags field in Fig. 4a, an example of the present disclosure can use the third bit of the Flags field to carry the indicating information. In particular, the indicating information can be an Active Detection Flag (AD Flag) that identifies the first packet as an active detection packet.

In an example, if the AD Flag is set, i.e., if the value of AD Flag is 1, then it indicates that the first SRH carries indicating information; if AD is not set, i.e., if the value of AD Flag is 0, then it indicates that the first SRH does not carry indicating information.

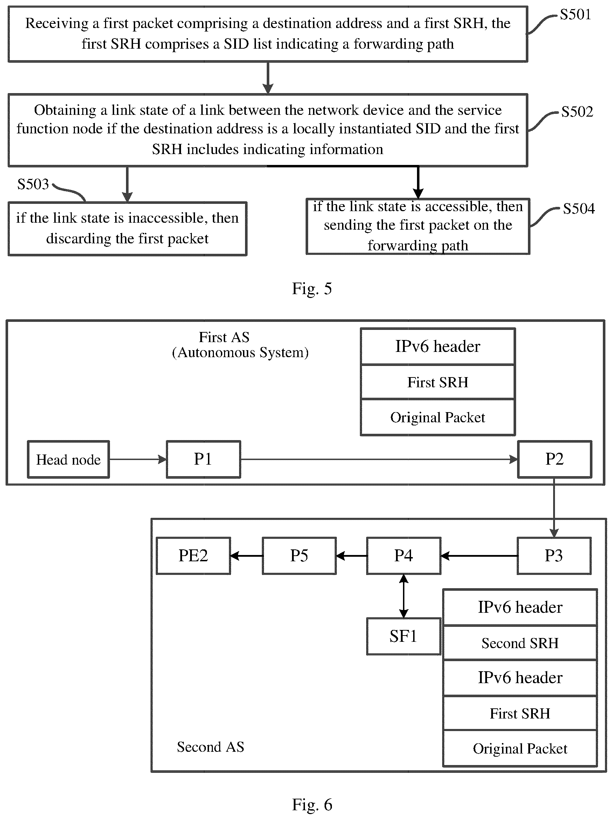

In another example of the present disclosure, the network device is connected with a service function node. In other words, the network device is an SFF node. As shown in Fig. 5, the method comprises the following blocks:
S501: receiving a first packet comprising a destination address and a first Segment Routing Header (SRH), the first SRH comprises a Segment ID (SID) list indicating a forwarding path;
In this example, S501 is identical to S301 and one can refer to the description of S301, which is further described here.

S502: obtaining a link state of a link between the network device and the service function node if the destination address is a locally instantiated SID and the first SRH includes indicating information.

In a mode of realization, the network device can monitor the link state with the service function node in real time, and record the link state in a data plane. Thus, the network device can obtain the link state of the link between the network device and the service function node from the data plane.

In this example, if the service function node fails and/or if the link between the network device and the service function node fails, then the link state is inaccessible;
if the service function node does not fail and the link between the network device and the service function node does not fail, then the link state is accessible.

The network device can determine whether a link between the network device and a service function node fails based on an interface state of an interface locally connected with the SF node. When the interface state is abnormal, it is determined that the link between the network device and the service function node fails; when the interface state is normal, it is determined that the link between the network device and the service function node does not fail. The network device can also determine the state of a link between the network device and the service function node by means of other methods in the prevent art, which is not limited by examples of the present disclosure.

In another mode of realization, if the network device determines that the service function node fails and/or a link between the network device and the service function node fails, then the forwarding switch between the network device and the service function node is set to be closed; if the service function node does not fail and the link between the network device and the service function node does not fail, then the forwarding switch between the network device and the service function node is set to be open.

Further, if the network device determines that the forwarding switch is in an open state, then it is determined that the link state is accessible; if it is determined that the forwarding switch is in a closed state, then it is determined that the link state is inaccessible.

S503: if the link state is inaccessible, then discarding the first packet.

It can be understood that, in the event that the first packet is discarded, the head node is unable to receive a response packet for the first packet and can then determine that the forwarding path of the first packet fails when the detection times out, and switch the forwarding path to a standby path.

S504: if the link state is accessible, then sending the first packet on the forwarding path.

In this example, sending the first packet on the forwarding path in this block is identical to the sending the first packet on the forwarding path in S302 and one can refer to the relevant description of S302, which is not further described here.

By employing the example of the present disclosure, in the event that the network device is connected with a service function node, the network device obtains a link state of a link between the network device and the service function node. If the link state is inaccessible, then the first packet is discarded. Thus, if the link between the network device and the service function node is inaccessible, the head node can timely discover that the link fails and switch to another forwarding path, which can improve the reliability of a service chain function.

In a scenario, the network device is an SFF node. The above-described S302, sending the first packet on the forwarding path if the destination address is a locally instantiated SID and the first SRH includes indicating information, can specifically be realized as follows:
If the destination address is a locally instantiated proxy SID and the first SRH includes indicating information, then the first packet is forwarded to a network device indicated by a next SID in the SID list.

In this example, the proxy SID can be End.AS SID, End.AD SID, or End.AM SID.

If the destination address is a locally instantiated proxy SID, then it means that the network device is an SFF node. When the network device determines that the first SRH includes indicating information, then it can be determined that the first packet is a detection packet and thus the first packet will not be forwarded to an SF node. The first packet can be forwarded to a network device indicated by a next SID in the SID list. In this example, the next SID node can be an ordinary endpoint node, or an SFF node, which is not limited by the examples of the present disclosure.

In another scenario, the SID list of the first SRH may include a BSID. The above-described S302, if the destination address is a locally instantiated SID and the first SRH includes indicating information, then sending the first packet on the forwarding path, can be specifically realized as follows:
if the destination address is a locally instantiated Binding Segment Identifier (BSID) and the first SRH includes the indicating information, then encapsulating the first packet with a second SRH including the indicating information in an outer layer of the first packet, and sending the first packet including the second SRH on a forwarding path indicated by a SID list included in the second SRH.

In this example, if the destination address is a locally instantiated BSID, then the network device will re-encapsulate the first packet with a layer of IPv6 header and second SRH. The second SRH also includes a SID list. Subsequently, the first packet is forwarded on the SID list included in the second SRH. The location of the indicating information in the second SRH is identical to that of the location of the indicating information of the first SRH, which is not further described here.

The example of the present disclosure also encapsulates indicating information in a second SRH. Thus, a network device on a forwarding path indicated by the SID list included in the second SRH can also recognize that the first packet containing the second SRH is a detection packet, thus avoiding the problem that the network device sends the first packet containing the second SRH to the service function node and causes the head node to erroneously switch paths, and achieving reliable protection of the SRv6 service chain primary and standby paths.

Description is made below in connection with specific examples. Fig. 6 is an exemplary schematic view of a scenario of cross-domain forwarding of a first packet. As shown in Fig. 6, a forwarding path crosses a first Autonomous System (AS) and a second AS. In this example, the first AS includes P1 and P2, and the second AS includes P3, P4, P5, and PE2. P4 is connected with SF1.

The head node can generate a first packet. A SID list included in a first SRH of the first packet is: P1.SID, P2.SID, P3.SID, PE2.SID, wherein, P3.SID is a BSID.

After P3 receives a first packet, it is determined that the destination address of the first packet is P3.SID, which is a locally instantiated BSID, and the first SRH of the first packet includes indicating information. Then P3 encapsulates the first packet with a second SRH and an IPv6 header in an outer layer of the first packet. The SID list in the second SRH is: P4.SID, P5.SID. The second SRH includes indicating information. Subsequently, P3 can send the first packet to P4 based on the SID list in the second SRH.

After P4 receives the first packet, it recognizes that the destination address of the first packet is a locally instantiated proxy SID and the second SRH includes indicating information. Then the first packet may not be sent to SF1. Instead, the first packet continues to be forwarded to P5, thus avoiding the problem that the head node erroneously switches paths because SF1 is unable to process the first packet.

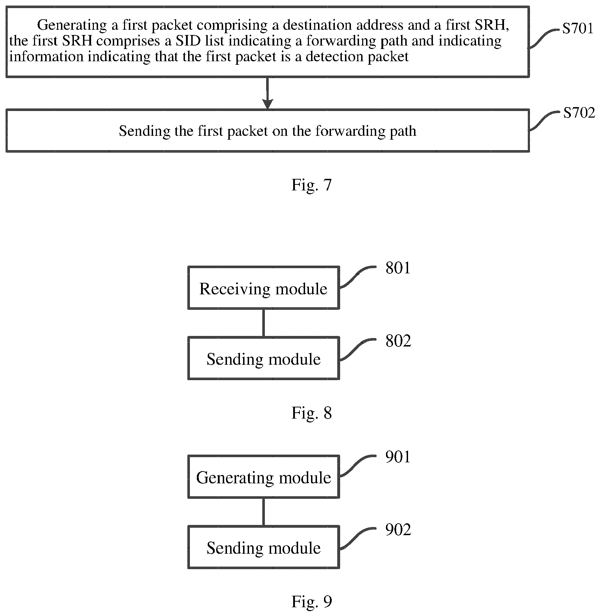

Based on the same inventive idea, an example of the present disclosure further provides a packet forwarding method applied to a head node. As shown in Fig. 7, the method comprises:
S701: generating a first packet comprising a destination address and a first Segment Routing Header (SRH), the first SRH comprises a Segment ID (SID) list indicating a forwarding path and indicating information indicating that the first packet is a detection packet;
The destination address of the first packet is the destination address in the IPv6 header of the first packet.

S702: sending the first packet on the forwarding path.

If the head node has not received a response packet for the first packet within a preset duration, then it switches to a standby forwarding path. Subsequently, packets are forwarded via the standby forwarding path.

In this example, in the event that the first packet is a BFD, the response packet for the first packet can be a BFD echo packet.

By employing the example of the present disclosure, the second network device generates the first packet and sends the first packet on the forwarding path, where the first packet includes indication information, and the indication information is used to indicate that the first packet is a detection packet, such that after receiving the first packet, the network device may determine that the first packet is a detection packet based on the indication information, and thus will not forward the first packet to the service function node. In this way, it is possible to avoid the service function node from discarding the first packet, thereby avoiding the problem that the head node erroneously switches the path due to the service function node discarding the packet used for detecting the path.

In an example of the present disclosure, the first SRH includes flags field in which one bit carries the indicating information. One can refer to the relevant description in the above-described examples for the structure of the first SRH, which is not further described here.

Based on the same inventive idea, an example of the present disclosure further provides a packet forwarding apparatus applied to a network device. As shown in Fig. 8, the apparatus comprises:
a receiving module 801, to receive a first packet comprising a destination address and a first Segment Routing Header (SRH), the first SRH comprises a Segment ID (SID) list indicating a forwarding path;
a sending module 802, to send the first packet on the forwarding path if the destination address is a locally instantiated SID and the first SRH includes indicating information, the indicating information is used for indicating that the first packet is a detection packet.

In an example, the network device is connected with a service function node; the apparatus further comprises: a obtaining module and a discarding module;
the obtaining module, to obtain a link state of a link between the network device and the service function node;
the discarding module, to discard the first packet if the link state obtained by the obtaining module is inaccessible;
the sending module 802, to send the first packet on the forwarding path if the link state obtained by the obtaining module is accessible.

In an example, the obtaining module is specifically to:
obtain the link state of the link between the network device and the service function node from a data plane;
wherein, if the service function node fails and/or the link between the network device and the service function node fails, then the link state is inaccessible;
if the service function node does not fail, and the link between the network device and the service function node does not fail, then the link state is accessible.

In an example, the first SRH comprises flags field, and one bit in the flags field carries the indicating information.

In an example, the sending module 802 is specifically to
forward, if the destination address is a locally instantiated proxy SID and the first SRH includes the indicating information, the first packet to a network device indicated by a next SID in the SID list; or,
encapsulate, if the destination address is a locally instantiated Binding Segment Identifier (BSID) and the first SRH includes the indicating information, the first packet with a second SRH including the indicating information in an outer layer of the first packet, and send the first packet including the second SRH on a forwarding path indicated by a SID list included in the second SRH.

An example of the present disclosure further provides a packet forwarding apparatus applied to a head node. As shown in Fig. 9, the apparatus comprises:
a generating module 901, to generate a first packet comprising a destination address and a first Segment Routing Header (SRH), the first SRH comprises a Segment ID (SID) list indicating a forwarding path and indicating information indicating that the first packet is a detection packet;
a sending module 902, to send the first packet on the forwarding path.

In an example, the apparatus further comprises: a switching module;
the switching module, to switch to a standby forwarding path if a response packet for the first packet has not been received within a preset duration.

In an example, the first SRH comprises flags field, and one bit in the flags field carries the indicating information.

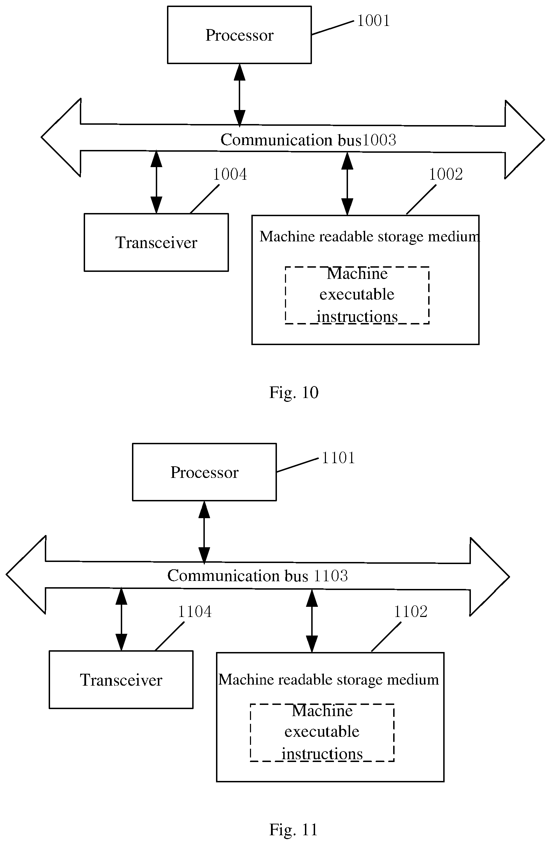

An example of the present disclosure further provides a network device. As shown in Fig. 10, the network device comprises:
a processor 1001;
a transceiver 1004;
a machine readable storage medium 1002 storing machine executable instructions executable by the processor 1011; the machine executable instructions causes the processor 1001 to execute the following operations:
   receiving, through the transceiver 1004, a first packet comprising a destination address and a first Segment Routing Header (SRH) comprising a SID list indicating a forwarding path;
   if the destination address is a locally instantiated SID and the first SRH includes indicating information used for indicating that the first packet is a detection packet, then sending, through the transceiver 1004, the first packet on the forwarding path.

In an example, the network device is connected with a service function node;
the machine executable instructions further cause the processor 1001 to execute the following operations:
obtaining a link state of a link between the network device and the service function node;
if the link state is inaccessible, then discarding the first packet;
if the link state is accessible, then sending the first packet on the forwarding path.

In an example, the machine executable instructions further cause the processor 1001 to execute the following operations:
obtaining the link state of the link between the network device and the service function node from a data plane;
wherein, if the service function node fails and/or the link between the network device and the service function node fails, then the link state is inaccessible;
if the service function node does not fail and the link between the network device and the service function node does not fail, then the link state is accessible.

In an example, the first SRH comprises flags field, and one bit in the flags field carries the indicating information.

In an example, the machine executable instructions further cause the processor 1001 to execute the following operations:
if the destination address is a locally instantiated proxy SID and the first SRH includes the indicating information, then forwarding, through the transceiver 1004, the first packet to a network device indicated by a next SID in the SID list; or
if the destination address is a locally instantiated Binding Segment Identifier (BSID) and the first SRH includes the indicating information, then encapsulating the first packet with a second SRH including the indicating information in an outer layer of the first packet, and sending, through the transceiver 1004, the first packet including the second SRH on a forwarding path indicated by a SID list included in the second SRH.

As shown in Fig. 10, the network device can further comprise a communication bus 1003. The processor 1001, the machine-readable storage medium 1002, and the transceiver 1004 communicate with each other via the communication bus 1003. The communication bus 1003 may be a Peripheral Component Interconnect (PCI) bus or an Extended Industry Standard Architecture (EISA) bus, etc. The communication bus 1003 can be divided into an address bus, a data bus, a control bus, etc.

The transceiver 1004 can be a wireless communication module and can exchange data with other devices under the control of the processor 1001.

The machine-readable storage medium 1002 may include Random Access Memory (RAM), and may also include Non-Volatile Memory (NVM), such as at least one disk storage. Additionally, the machine-readable storage medium 1002 may also be at least one storage device located remotely from the above-mentioned processor.

The processor 1001 may be a general-purpose processor, including a Central Processing Unit (CPU), a Network Processor (NP), etc.; it may also be a Digital Signal Processing (DSP), an Disclosure Specific Integrated Circuit (ASIC), a Field-Programmable Gate Array(FPGA), or other programmable logic devices, discrete gate or transistor logic devices, discrete hardware components.

An example of the present disclosure further provides a head node. As shown in Fig. 11, the head node comprises:
a processor 1101;
a transceiver 1104;
a machine readable storage medium 1102 storing machine executable instructions executable by the processor 1101; the machine executable instructions cause the processor to execute the following operations:
   generating a first packet comprising a destination address and a first Segment Routing Header (SRH), the first SRH comprises a Segment ID (SID) list indicating a forwarding path and indicating information indicating that the first packet is a detection packet;
   sending, through the transceiver 1104, the first packet on the forwarding path.

In an example, the machine executable instructions further cause the processor 1101 to execute the following operation:
if a response packet for the first packet has not been received within a preset duration, then switching to a standby forwarding path.

In an example, the first SRH comprises flags field, and one bit in the flags field carries the indicating information.

As shown in Fig. 11, the head node can further comprise a communication bus 1103. The processor 1101, the machine-readable storage medium 1102, and the transceiver 1104 communicate with each other via the communication bus 1103. The communication bus 1103 may be a Peripheral Component Interconnect (PCI) bus or an Extended Industry Standard Architecture (EISA) bus, etc. The communication bus 1103 can be divided into an address bus, a data bus, a control bus, etc.

The transceiver 1104 can be a wireless communication module and can exchange data with other devices under the control of the processor 1101.

The machine-readable storage medium 1102 may include Random Access Memory (RAM), and may also include Non-Volatile Memory (NVM), such as at least one disk storage. Additionally, the machine-readable storage medium 1102 may also be at least one storage device located remotely from the above-mentioned processor.

The processor 1101 may be a general-purpose processor, including a Central Processing Unit (CPU), a Network Processor (NP), etc.; it may also be a Digital Signal Processing (DSP), an Disclosure Specific Integrated Circuit (ASIC), a Field-Programmable Gate Array(FPGA), or other programmable logic devices, discrete gate or transistor logic devices, discrete hardware components.

Based on the same inventive idea, based on the methods of packet forwarding provided by the above-described examples of the present disclosure, an example of the present disclosure further provides a machine readable storage medium storing machine executable instructions, when called and executed by a processor, the machine executable instructions causing the processor to: implement of the methods of packet forwarding described above.

In another example provided by the present disclosure, a computer program product containing instructions is further provided, the computer program product, when running on a computer, causing the computer to implement any of the methods of packet forwarding in the above-described examples.

It should be noted that relational terms herein, such as "first" and "second," are used only to distinguish one entity or operation from another entity or operation, and do not necessarily require or imply that any such actual relationship or order exists between these entities or operations. Moreover, the terms "comprising," "comprise," or any other variation thereof are intended to encompass non-exclusive inclusion such that a process, method, article or device comprising a list of elements includes not only those elements, but also includes other elements not explicitly listed or inherent to such a process, method, article or apparatus. Without further limitation, an element qualified by the phrase "comprising a ..." does not preclude the presence of additional identical elements in a process, method, article or apparatus that includes the element.

Each example in this specification is described in a related manner, and the same and similar parts between the various examples may be referred to each other, and the description of each example focuses on the differences from other examples. In particular, for the device examples, since they are basically similar to the method examples, the description is relatively simple, and reference may be made to some description of the method examples for related parts.

The above are only preferred examples of the present disclosure, and are not intended to limit the present disclosure. Any modifications, equivalent replacements, improvements, etc. made within the spirit and principles of the present disclosure shall be included in the scope of protection of the present disclosure.

## Claims

1. A packet forwarding method, **characterized in that**, the method is applied to a network device and comprises:
receiving a first packet comprising a destination address and a first Segment Routing Header (SRH), the first SRH comprises a Segment ID (SID) list indicating a forwarding path;
sending the first packet on the forwarding path if the destination address is a locally instantiated SID and the first SRH includes indicating information, the indicating information is used for indicating that the first packet is a detection packet.

2. The method of claim 1, **characterized in that**, the network device is connected with a service function node;
before sending the first packet on the forwarding path, the method further comprises:
obtaining a link state of a link between the network device and the service function node;
if the link state is inaccessible, then discarding the first packet;
if the link state is accessible, then sending the first packet on the forwarding path.

3. The method of claim 2, **characterized in that**, obtaining the link state of the link between the network device and the service function node specifically comprises:
obtaining the link state of the link between the network device and the service function node from a data plane;
wherein, if the service function node fails and/or the link between the network device and the service function node fails, then the link state is inaccessible;
if the service function node does not fail and the link between the network device and the service function node does not fail, then the link state is accessible.

4. The method of claim 1, **characterized in that**, the first SRH comprises flags field, and one bit in the flags field carries the indicating information.

5. The method of any one of claims 1 to 4, **characterized in that**, sending the first packet on the forwarding path if the destination address is a locally instantiated SID and the first SRH includes indicating information, specifically comprises:
if the destination address is a locally instantiated proxy SID and the first SRH includes the indicating information, then forwarding the first packet to a network device indicated by a next SID in the SID list; or,
if the destination address is a locally instantiated Binding Segment Identifier (BSID) and the first SRH includes the indicating information, then encapsulating the first packet with a second SRH including the indicating information in an outer layer of the first packet, and sending the first packet including the second SRH on a forwarding path indicated by a SID list included in the second SRH.

6. A packet forwarding method, **characterized in that**, the method is applied to a head node and comprises:
generating a first packet comprising a destination address and a first Segment Routing Header (SRH), the first SRH comprises a Segment ID (SID) list indicating a forwarding path and indicating information indicating that the first packet is a detection packet;
sending the first packet on the forwarding path.

7. The method of claim 6, **characterized in that**, after sending the first packet on the forwarding path, the method further comprises:
if a response packet for the first packet has not been received within a preset duration, then switching to a standby forwarding path.

8. The method of claim 6, **characterized in that**, the first SRH comprises flags field, and one bit in the flags field carries the indicating information.

9. A packet forwarding apparatus, **characterized in that**, the apparatus is applied to a network device and comprises:
a receiving module, to receive a first packet comprising a destination address and a first Segment Routing Header (SRH), the first SRH comprises a Segment ID (SID) list indicating a forwarding path;
a sending module, to send the first packet on the forwarding path if the destination address is a locally instantiated SID and the first SRH includes indicating information, the indicating information is used for indicating that the first packet is a detection packet.

10. The apparatus of claim 9, **characterized in that**, the network device is connected with a service function node, the apparatus further comprises: a obtaining module and a discarding module;
the obtaining module, to obtain a link state of a link between the network device and the service function node;
the discarding module, to discard the first packet if the link state obtained by the obtaining module is inaccessible;
the sending module, to send the first packet on the forwarding path if the link state obtained by the obtaining module is accessible.

11. The apparatus of claim 10, **characterized in that**, the obtaining module is specifically to:
obtain the link state of the link between the network device and the service function node from a data plane;
wherein, if the service function node fails and/or the link between the network device and the service function node fails, then the link state is inaccessible;
if the service function node does not fail, and the link between the network device and the service function node does not fail, then the link state is accessible.

12. The apparatus of claim 9, **characterized in that**, the first SRH comprises flags field, and one bit in the flags field carries the indicating information.

13. The apparatus of any one of claims 9 to 12, **characterized in that**, the sending module is specifically to:
forward, if the destination address is a locally instantiated proxy SID and the first SRH includes the indicating information, the first packet to a network device indicated by a next SID in the SID list; or,
encapsulate, if the destination address is a locally instantiated Binding Segment Identifier (BSID) and the first SRH includes the indicating information, the first packet with a second SRH including the indicating information in an outer layer of the first packet, and send the first packet including the second SRH on a forwarding path indicated by a SID list included in the second SRH.

14. A packet forwarding apparatus, **characterized in that**, the apparatus is applied to a head node and comprises:
a generating module, to generate a first packet comprising a destination address and a first Segment Routing Header (SRH), the first SRH comprises a Segment ID (SID) list indicating a forwarding path and indicating information indicating that the first packet is a detection packet;
a sending module, to send the first packet on the forwarding path.

15. The apparatus of claim 14, **characterized in that**, the apparatus further comprises: a switching module;
the switching module, to switch to a standby forwarding path if a response packet for the first packet has not been received within a preset duration.

16. The apparatus of claim 14, **characterized in that**, the first SRH comprises flags field, and one bit in the flags field carries the indicating information.

17. A network device, **characterized in that**, the network device comprises:
a processor;
a transceiver;
a machine readable storage medium storing machine executable instructions executable by the processor; the machine executable instructions causes the processor to execute the following operations:
receiving a first packet through the transceiver, the first packet comprises a destination address and a first Segment Routing Header (SRH), the first SRH comprises a Segment ID (SID) list indicating a forwarding path;
sending the first packet on the forwarding path through the transceiver if the destination address is a locally instantiated SID and the first SRH includes indicating information, the indicating information is used for indicating that the first packet is a detection packet.

18. The network device of claim 17, **characterized in that**, the network device is connected with a service function node;
the machine executable instructions further cause the processor to execute the following operations:
obtaining a link state of a link between the network device and the service function node;
if the link state is inaccessible, then discarding the first packet;
if the link state is accessible, then sending the first packet on the forwarding path.

19. The network device of claim 18, **characterized in that**, the machine executable instructions further cause the processor to execute the following operations:
obtaining the link state of the link between the network device and the service function node from a data plane;
wherein, if the service function node fails and/or the link between the network device and the service function node fails, then the link state is inaccessible;
if the service function node does not fail and the link between the network device and the service function node does not fail, then the link state is accessible.

20. The network device of claim 17, **characterized in that**, the first SRH comprises flags field, and one bit in the flags field carries the indicating information.

21. The network device of any one of claims 17 to 20, **characterized in that**, the machine executable instructions further cause the processor to execute the following operations:
if the destination address is a locally instantiated proxy SID and the first SRH includes the indicating information, then forwarding, through the transceiver, the first packet to a network device indicated by a next SID in the SID list; or
if the destination address is a locally instantiated Binding Segment Identifier (BSID) and the first SRH includes the indicating information, then encapsulating the first packet with a second SRH including the indicating information in an outer layer of the first packet, and sending, through the transceiver, the first packet including the second SRH on a forwarding path indicated by a SID list included in the second SRH.

22. A head node, **characterized in that**, the head node comprises:
a processor;
a transceiver;
a machine readable storage medium storing machine executable instructions executable by the processor; the machine executable instructions cause the processor to execute the following operations:
generating a first packet comprising a destination address and a first Segment Routing Header (SRH), the first SRH comprises a Segment ID (SID) list indicating a forwarding path and indicating information indicating that the first packet is a detection packet;
sending, through the transceiver, the first packet on the forwarding path.

23. The head node of claim 22, **characterized in that**, the machine executable instructions further cause the processor to execute the following operation:
if a response packet for the first packet has not been received within a preset duration, then switching to a standby forwarding path.

24. The head node of claim 22, **characterized in that**, the first SRH comprises flags field, and one bit in the flags field carries the indicating information.

25. A machine readable storage medium storing machine executable instructions, when called and executed by a processor, the machine executable instructions causing the processor to: implement the method of any one of claims 1 to 5 or 6 to 8.

26. A computer program product, **characterized in that**, the computer program product causes the processor to: implement the method of any one of claims 1 to 5 or 6 to 8.
